# EUROPÄISCHE PATENTANMELDUNG

(11) **EP 1 731 342 A2**
(43) Veröffentlichungstag der Anmeldung: **13.12.2006**
(21) Anmeldenummer: 06011481.6
(22) Anmeldetag: 02.06.2006
(51) Int. Cl.: B60J 5/06

(54) **Nutzfahrzeug mit einer seitlichen Schiebetür und einer Hecktür**

(30) Priorität: 08.06.2005 DE 102005026287
(71) Anmelder: DaimlerChrysler AG, 70567 Stuttgart (DE)
(72) Erfinder: Kappel, Robert, 71034 Böblingen (DE); Weisshappel, Helmut, 71067 Sindelfingen (DE)

(57) **Zusammenfassung**

Nutzfahrzeug mit einer seitlichen Schiebetür (2), einer Führung der Schiebetür (2) außerhalb der Fahrzeugkarosserie, einer seitlich aufschwenkbaren, in zumindest vollständig geöffnetem Zustand mit der über ein bestimmtes Öffnungsmaß hinaus geöffneten Schiebetür (2) kollidierenden Hecktür (1) und einer Einrichtung zur Begrenzung des Öffnungsweges der Schiebetür (2) bei kollisionsgefährdend geöffneter Hecktür, wobei an der Schiebetür (2) und der Fahrzeugkarosserie Schiebetür-Wegbegrenzungsmittel durch miteinander zusammenwirkende Wegbegrenzungs-Anschlagelemente vorgesehen sind. Die Schiebetür (2) soll mit einer betriebssicher funktionierenden Wegsperreinrichtung versehen sein.

Zu diesem Zweck bildet ein Außenkonturbereich der zur Fahrzeugheckseite gelegenen, karosserieseitigen Schiebetür (2) -Öffnungszarge (6) das karosserieseitige Anschlagelement, während das schiebetürseitige Anschlagelement zwischen einer anschlagwirksamen und einer anschlagunwirksamen Stellung verlagerbar ist, wobei ein gewollter oder tatsächlicher, über 90° hinausgehender Öffnungswinkel der Hecktür (1) als Voraussetzung für eine tatsächliche Verlagerung des türseitigen Anschlagelementes (3) in dessen anschlagwirksame Anschlagposition erforderlich ist.

## Beschreibung

Die Erfindung betrifft eine seitliche Schiebetür eines Nutzfahrzeuges nach dem Oberbegriff des Patentanspruchs 1.

Aus DE 199 26 635 A1 und DE 195 28 891 A1 ist es bei der Lagerung von seitlichen Schiebetüren an Fahrzeugen bekannt, eine Öffnungsbegrenzung für den Fall aktiv zu schalten, in dem bei einer geöffneten Tankklappe die Gefahr besteht, diese durch ein vollständiges Öffnen der Schiebetür zu beschädigen. Bei den Ausführungen nach jenen Dokumenten erfolgt die Schiebetür-Öffnungsbegrenzung dadurch, dass bei einem Öffnen der Tankklappe ein fahrzeugseitig vorgesehener Wegbegrenzer in den Schiebeweg der Schiebetür eingeschoben wird. Durch einen derart aktivierten Wegbegrenzer wird die Schiebetür jeweils bei einer geöffneten Tankklappe gegen eine Kollision mit dieser wirksam geschützt. Der Wegbegrenzer befindet sich jeweils in der fahrzeugseitigen Laufschiene für die Schiebetür und ist somit bei geschlossener Schiebetür der Außenatmosphäre in gleicher Weise ausgesetzt wie der Verschiebeweg innerhalb der Laufschiene selbst. Die vorbekannten Wegbegrenzer sind jeweils in erster Linie Personenkraftfahrzeugen zugeordnet, das heißt volumen- und gewichtsmäßig nicht besonders großen Schiebetüren im Vergleich zu solchen von Nutzfahrzeugen.

Die Anordnung eines Schiebetür-Wegbegrenzers innerhalb der fahrzeugseitigen Laufschiene für die Schiebetür wirkt jeweils mit einem die Schiebetür in der Laufschiene tragenden Führungshebel zusammen. Dabei wirkt die Aufprallkraft zwischen Wegbegrenzer und Führungshebel der Schiebetür jeweils auf das der Laufschiene zugewandte Ende des Führungshebels. Hierdurch entsteht bei einem Aufprall einer Schiebetür über den Führungshebel an dem Wegbegrenzer auf den Anlenkungsbereich des Führungshebels an der Schiebetür ein sehr hohes Drehmoment. Die Folge hieraus ist es, dass gerade bei Schiebetüren von Nutzfahrzeugen bei einem übermäßig schwungvollen Öffnen der Schiebetür häufig Verformungen auftreten, die zu einer Zerstörung der Verbindung zwischen Führungshebel und Schiebetür führen oder zumindest ein Maß erreichen, das zu einer Störung einer einwandfreien Schiebetür-Funktion führen kann.

Die Erfindung beschäftigt sich bei einer gattungsgemäßen seitlichen Schiebetür eines Nutzfahrzeuges mit dem Problem, bei einem notwendigen Vorsehen eines Türschiebeweg-Begrenzers eine sichere und zerstörungsfreie Funktion auch bei einem unsachgemäß schwungvollen Öffnen der Schiebetür mit konstruktiv einfachen Mitteln sicherzustellen.

Gelöst wird dieses Problem durch eine Ausführung einer gattungsgemäßen Schiebetür nach dem kennzeichnenden Merkmal des Patentanspruchs 1.

Vorteilhafte und zweckmäßige Ausgestaltungen sind Gegenstand der Unteransprüche.

Die Erfindung beruht auf dem allgemeinen Gedanken, die Mittel zur Schiebetür-Wegbegrenzung an einerseits der Fahrzeugkarosserie und andererseits der Schiebetür jeweils in solchen Bereichen vorzusehen, in denen die Wegbegrenzungsmittel keine großen Hebelwirkungen erzeugen können. Des Weiteren werden Bereiche zur Anordnung der Wegbegrenzungsmittel erfindungsgemäß ausgewählt, die möglichst geschützt gegenüber der Außenatmosphäre des Fahrzeuges liegen und zwar sowohl karosserieals auch schiebetürseitig. Als karosserieseitiges Wegbegrenzungsmittel bietet sich besonders die heckseitig gelegene seitliche Zarge der Schiebetüröffnung an, die beispielsweise eine C-Säule eines Nutzfahrzeuges sein kann. Zum Zusammenspiel mit diesem karosserieseitigen Wegbegrenzer ist in der Schiebetür ein Gegenanschlag vorgesehen, der zwischen einer wegbegrenzenden und einer nicht wegbegrenzenden Stellung verlagerbar ist. Dieser schiebetürseitige Anschlag kann innerhalb der Schiebetür in einem Bereich vorgesehen werden, der dort von an sich vorhandenen Türstreben beziehungsweise - holmen als Türverstärkungsbereichen gebildet wird.

Zweckmäßigerweise kann der türseitige Wegbegrenzer als ein Schwenkkeil ausgebildet sein. Die Lagerung eines solchen Schwenkkeiles in einer Türstrebe beziehungsweise einem Türholm führt dazu, dass der Anlenkungsbereich eines solchen türseitigen Anschlages in Fahrzeugquerrichtung sehr nahe gegenüber dem karosserieseitigen Anschlag angebracht werden kann. Denn durch Türstreben beziehungsweise -holme verstärkte Schiebetürbereiche weisen bei einer geöffneten Schiebetür den jeweils geringsten Quer-Abstand gegenüber der Fahrzeugkarosserie auf.

Erfindungsgemäß kommt es in erster Linie darauf an, die Kollision einer gattungsgemäßen Schiebetür mit einer um 270° seitlich geöffneten Hecktür zu vermeiden. Der umgekehrte Fall, nämlich eine Kollision der Hecktür beim Aufschwenken um 270° gegenüber einer bereits vollständig geöffneten Schiebetür ist weniger wahrscheinlich. Dies ergibt sich daraus, dass nach gesetzlicher Vorschrift eine um insgesamt 270° schwenkbare Hecktür in einem ersten Schritt lediglich bis zu 90° geöffnet werden darf. Ein Überschwenken über einen Öffnungswinkel von 90° hinaus muss durch eine 90°-Schwenksperre, die gewöhnlich in den Türscharnieren selbst vorgesehen ist, sicher verhindert werden. Für ein Öffnen über einen Schwenkwinkel von 90° hinaus muss die vorhandene Schwenksperre über einen Lösesicherungshebel von Hand beseitigt werden. Die Praxis hat gezeigt, dass es durch diesen Lösesicherungsvorgang grundsätzlich gewährleistet ist, dass eine um insgesamt 270° zu öffnende Hecktür nicht auf eine vollständig geöffnete Schiebetür aufgeschlagen wird. Daher sichern die erfindungsgemäßen Maßnahmen bei einer ersten, grundsätzlichen Lösung zunächst einmal die Vermeidung einer Kollision einer zu öffnenden Schiebetür mit einer sich in dem Schiebeweg befindlichen, vollständig um 270° geöffneten Hecktür.

Da ein vollständiges Öffnen der Schiebetür nur dann verhindert werden soll, wenn Kollisionsgefahr mit einer vollständig um 270° geöffneten Hecktüre besteht, dürfen die Wegbegrenzungsmaßnahmen für die Schiebetür nur dann wirksam werden können, wenn eine solche Kollisionsgefahr durch eine vollständig geöffnete Hecktür auch tatsächlich bestehen kann.

Erreicht kann dies beispielsweise dadurch werden, dass den Wegbegrenzungsmitteln 2 Grundzustände zugeordnet werden können und zwar ein erster Grundzustand, in dem die Wegbegrenzungsmittel ihre inaktive Position einnehmen müssen, das heißt diese nicht verlassen können, und ein zweiter Grundzustand, in dem die Wegbegrenzungsmittel in eine aktive, anschlagwirksame Position verlagerbar sind. Welcher dieser beiden Grundzustände jeweils vorliegt, wird durch die Schwenklage der Hecktür bestimmt und zwar derart, dass der zweite Grundzustand erst bei einem gewollten oder tatsächlichen Überschreiten des Öffnungsschwenkwinkels der Hecktür über einen vorgegebenen Winkelgrenzwert von beispielsweise 90° hinaus vorliegen kann. Der zweite Grundzustand der Wegbegrenzungsmittel kann beispielsweise automatisch durch ein Betätigen der Lösesicherung in der Schwenksperre der Hecktür eingeschaltet werden. Dieses Einschalten in den zweiten Grundzustand kann elektrisch erfolgen, indem das Betätigen der Lösesicherung ein elektrisches Signal erzeugt, das wiederum die Wegbegrenzungsmittel aktivierbar schaltet, damit diese zwischen einer inaktiven und einer aktiven Position verlagert werden können. Das eigentliche Auslösen einer Verlagerungsbewegung erfolgt in Abhängigkeit des Öffnungswinkels der Schiebetür und zwar jeweils bei Überschreiten einer vorgegebenen Größe des Schiebetür-Öffnungsweges. Diese Größe des Schiebetür-Öffnungsweges kann durch karosserie- und schiebetürseitig angeordnete, miteinander korrespondierende Sensoren erfasst werden und als Betätigungssignal für ein Verlagern der Wegbegrenzungsmittel verwendet werden. Durch ein solches einerseits von dem Öffnungsweg beziehungsweise einer bestimmten Öffnungsstellung der Schiebetür abhängiges Einleiten einer Verlagerung der Wegbegrenzungsmittel bei andererseits ausschließlich einem aktiv geschalteten zweiten Grundzustand dieser Wegbegrenzungsmittel können die Wegbegrenzungsmittel ausschließlich bei Schiebetür-Stellungen betätigt werden, bei denen ein Verlagern innerhalb des Bereiches der Türöffnung in diese hinein noch vor einem gegenseitigen Anschlagen möglich ist. Bei dieser Ausführungsform der Erfindung, bei der für ein tatsächliches Verlagern der Wegbegrenzungsmittel ein Öffnungssignal der Hecktür notwendig ist, können die Wegsensoren stets aktiv geschaltet sein.

Bei Vorhandensein eines Schwenkkeiles als Anschlagelement in der Schiebetür wird dieser Schwenkkeil bei einer Verlagerung in Richtung der Fahrzeugkarosserie ausgeschwenkt. In Richtung des Fahrzeugheckes soll erfindungsgemäß bevorzugt die Anschlagfläche des türseitigen Anschlagelementes der vertikalen Schwenkachse des Schwenkkeiles vorgelagert sein.

Das türseitige Anschlagelement kann mit dämpfungswirksamen Mitteln versehen sein, um bei einem Aufeinandertreffen der karosserie- und türseitigen Anschlagmittel eine Stoßdämpfung zu erzielen.

Das von dem Schwenkwinkel der Hecktür abhängige Aktivieren der Wegbegrenzungsmittel für eine Verlagerbarkeit kann durch ein Aktivschalten eines Verlagerungsantriebes der Wegbegrenzungsmittel - wie vorstehend beschrieben - erfolgen oder durch ein von dem Schwenkwinkel der Hecktür abhängiges Aktivschalten der Schiebetür-Wegsensoren aus einem sonst inaktiven Zustand. Ein inaktiver Zustand in diesem Sinne liegt immer dann vor, wenn keine Kollisionsgefahr durch eine zu weit, insbesondere vollständig geöffnete Hecktür vorliegt. Ist ein von dem Schwenkwinkel der Hecktür abhängiges Aktivschalten der Schiebetür-Wegsensoren vorgesehen, kann der Verlagerungsantrieb der Wegbegrenzungsmittel stets für das Durchführen von Verlagerungsbewegungen aktiv geschaltet sein.

Während es erfindungsgemäß in erster Linie darauf ankommt, eine Kollisionsgefahr zwischen Schiebetür und Hecktür dann zu vermeiden, wenn die Hecktür als erstes in den gefährdeten Kollisionsbereich gelangt, kann erfindungsgemäß auch der umgekehrte Fall beherrscht werden. Hierfür ist es lediglich erforderlich, bei einer vollständig geöffneten Schiebetür ein Lösen der Aufschwenksperre der Hecktür zu verhindern. Möglich ist dies dadurch, dass ein Wegsensor die jeweilige Stellung einer geöffneten Schiebetür daraufhin überprüft, ob sich die Schiebetür in dem Kollisionsraum mit der Hecktür befindet und falls dies der Fall ist, durch ein entsprechendes Signal an die Lösesicherung der Hecktür-Schwenksperre deren Lösen verhindert, das heißt bei einem solchen Schiebetür-Zustand die Lösesperre einfach arretiert.

Als Wegsensoren für eine Feststellung des Schiebetüröffnungswegs können beispielsweise Einrichtungen zur Erfassung von magnetischen Feldstärkeänderungen eingesetzt werden. Solche Einrichtungen können nach dem Induktionsprinzip aus einer einerseits Induktionsspule und andererseits einem Magneten bestehen.

Ein vorteilhaftes, nachstehend näher erläutertes Ausführungsbeispiel ist in der Zeichnung dargestellt.

In dieser zeigen:
- Fig. 1: eine Seitenansicht eines Fahrzeuges mit vollständig um 270° geöffneter Hecktür und teilweise bis kurz vor dem Kollisionsraum mit der Hecktür geöffneter Schiebetür,
- Fig. 2: einen Schnitt durch die Schiebetür nach Linie II-II in Fig. 1.

Ein Kleintransporter als Nutzfahrzeug ist heckseitig mit jeweils seitlich um 270° aufschwenkbaren Hecktüren 1 sowie einer seitlichen Schiebetür 2 ausgerüstet. Die Schiebetür 2 kollidiert bei maximal möglichem Öffnungsweg mit der vollständig geöffneten Hecktür 1.

Zur Vermeidung einer solchen Kollision sind zwischen der Schiebetür 2 und der Karosserie Wegbegrenzungsmittel zur Beschränkung eines möglichen Öffnungsweges der Schiebetür 2 vorgesehen.

Diese Wegbegrenzungsmittel sind türseitig ein Schwenkkeil 3 sowie fahrzeugseitig die hintere Türzarge 6 der Türöffnung, die bei dem gezeichneten Fahrzeugbeispiel die Fahrzeug-C-Säule ist.

Der Schwenkkeil 3 ist in dem gezeichneten Beispiel in einer oberen Türverstrebung angeordnet. In dieser Türverstrebung ist eine Ausnehmung 4 vorgesehen, in der der Schwenkkeil 3 in einer vertikalen Schwenkkeil-Achse 5 gelagert ist. In ausgeschwenkter Position stellt der der Fahrzeugheckseite zugewandte Bereich des Schwenkkeiles 3 eine an die C-Säule anlegbare Anschlagfläche dar. In welcher Höhe der Schiebetür 2 der Schwenkkeil 3 angeordnet wird, ist an sich gleichgültig, vorausgesetzt es befindet sich in diesem Bereich eine Türverstrebung zur Befestigung. Somit kann der Schwenkkeil 3 insbesondere auch in der Mitte der Türhöhe in einer dort vorhandenen Verstrebung angebracht sein. Zur Verlagerung des Schwenkkeiles 3 dient ein mit diesem zusammenwirkender Verlagerungsantrieb 9.

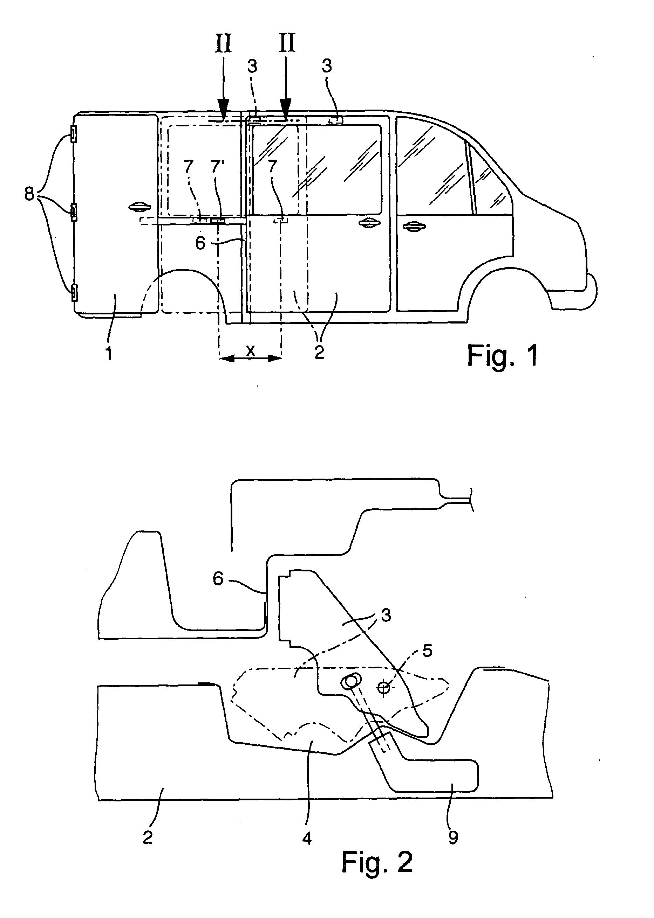

Befindet sich die Hecktür 1 in einem Öffnungsschwenkbereich bis zu maximal 90°, so nimmt der Schwenkkeil 3 eine zurückgezogene Lage ein, in der er nicht als Wegbegrenzer wirken soll. In diesem zurückgezogenen Zustand (in Fig. 2 in unterbrochener Linie gezeichnete Position des Schwenkkeiles 3) ist ein Anschlag gegen die C-Säule 6 nicht möglich.

Sowohl an der Schiebetür 2 wie auch an der von dieser zu überfahrenden Fahrzeugkarosserie sind jeweils für ein Zusammenwirken bestimmte Wegsensoren 7, 7' vorgesehen. Diese Wegsensoren können sein fahrzeugseitig eine Induktionsspule als Wegsensor 7' und türseitig ein Magnet als Wegsensor 7. Die Wegsensoren 7, 7' sind tür- und fahrzeugseitig derart zueinander angeordnet, dass sie bei einer Überdeckung dasjenige Öffnungsmaß festlegen, bei dem der Schwenkkeil 3 der Wegbegrenzungseinrichtung verlagert werden kann. Voraussetzung dafür, dass die Wegbegrenzungseinrichtung durch die Sensoren 7, 7' aktiv schaltbar ist, ist ein entsprechend aktiver Grundzustand sowohl des Verlagerungsantriebes 9 des Schwenkkeiles 3 sowie der Wegsensoren 7, 7'. Dieser Zustand ist nur dann gegeben, wenn durch eine vollständig, das heißt um 270° bereits geöffnete oder noch bei geschlossener Schiebetür 2 zu öffnender Hecktür 1 für die Schiebetür 2 eine Kollisionsgefahr besteht beziehungsweise zu befürchten ist. Für eine Aktivierung der Wegsensoren 7, 7' beziehungsweise des Verlagerungsantriebes 9 des Schwenkkeiles 3 bei einer derartigen Kollisionsgefahr zwischen Schiebe- und Hecktür 2;1 ist in den Öffnungsscharnieren 8 der Hecktür 1, die nach gesetzlicher Vorschrift mit einer 90°-Schwenkwinkelsperre versehen sein müssen, eine Einrichtung vorgesehen, die bei einer Betätigung einer Lösesicherung für die Schwenkwinkelbegrenzung ein Aktivierungssignal an die Wegsensoren 7, 7' beziehungsweise den Verlagerungsantrieb 9 des Schwenkkeiles 3 abgibt, das heißt insbesondere elektrisch überträgt.

### Praktisch bedeutet dies Folgendes:

Soll eine Hecktür vollständig um 270° geöffnet werden, so muss nach einem Öffnen um 90° von der Bedienungsperson von Hand eine Lösesicherung bei der Schwenkwinkelbegrenzungseinrichtung betätigt werden. Wird diese Lösesicherung betätigt, so erfolgt durch ein entsprechendes, insbesondere elektrisches Signal, zwangsläufig eine Aktivschaltung der Wegsensoren 7, 7' beziehungsweise des Verlagerungsantriebes 9 des Schwenkkeiles 3. Sind wiederum die Wegsensoren 7, 7' gemeinsam mit dem Verlagerungsantrieb 9 des Schwenkkeiles 3 aktiv beziehungsweise aktiv geschaltet, so sorgen die Wegsensoren 7, 7' bei einem Öffnen der Schiebetür 2 über ein bestimmtes Türöffnungsmaß hinaus für ein Verlagern des Schwenkkeiles 3 in dessen Anschlagposition. Die Wegsensoren 7, 7' müssen zu diesem Zweck derartig gegeneinander ausgerichtet sein, dass die Wegsperreeinrichtung so rechtzeitig betätigt wird, das heißt der Schwenkkeil 3 so rechtzeitig in seine Anschlagposition verlagert werden kann, dass eine erforderliche Wegbegrenzung auch tatsächlich sicher erfolgen kann.

In der Fig. 1 ist der Öffnungsweg, den die Schiebetür 2 bis zu einer Betätigung der Wegsperreeinrichtung zurücklegen kann, mit x bezeichnet. Dies ist wiederum der Abstand zwischen dem türseitigen Wegsensor 7 bei geschlossener Schiebetür und dem fahrzeugseitig angebrachten Wegsensor 7. Beim Öffnen der Schiebetür 2 kommt es zu einer Überdeckung der Wegsensoren 7 der Schiebetür 2 und der Karosserie. Ob dabei ein Verlagern des Schwenkkeiles 3 ausgelöst wird, hängt jeweils davon ab, ob beim Überfahren bereits eine Kollisionsgefahr durch eine aufgeschwenkte Hecktür 1 bereits besteht, das heißt an den Verlagerungsantrieb 9 beziehungsweise die Wegsensoren 7, 7' bereits gemeldet ist oder nicht

Für den Fall, dass auch eine Kollision der Hecktür 1 mit einer zuvor vollständig aufgeschobenen Schiebetür 2 vermieden werden soll, befindet sich beispielsweise in dem Hecktüröffnungsscharnier 8 ein Blockierelement, durch das ein Öffnen der Lösesicherung des Türscharnierschwenkwinkelbegrenzers nicht möglich ist. Dieses Blockierelement wird geschaltet von zwischen der Schiebetür 2 und der Fahrzeugkarosserie vorgesehenen Wegsensoren. In der Zeichnung sind dieses Blockadeelement und die entsprechenden Wegsensoren nicht dargestellt.

Alle in der Beschreibung und in den nachfolgenden Ansprüchen dargestellten Merkmale können sowohl einzeln als auch in beliebiger Form miteinander kombiniert erfindungswesentlich sein.

## Patentansprüche

1. Seitliche Schiebetür (2) eines Nutzfahrzeuges mit einer Führung der Schiebetür (2) außerhalb der Fahrzeugkarosserie, einer seitlich aufschwenkbaren, in zumindest vollständig geöffnetem Zustand mit der über ein bestimmtes Öffnungsmaß hinaus geöffneten Schiebetür (2) kollidierenden Hecktür (1) und einer Einrichtung zur Begrenzung des Öffnungsweges der Schiebetür (2) bei kollisionsgefährdend geöffneter Hecktür, wobei an der Schiebetür (2) und der Fahrzeugkarosserie Schiebetür-Wegbegrenzungsmittel durch miteinander zusammenwirkende Wegbegrenzungs-Anschlagelemente vorgesehen sind,
**dadurch gekennzeichnet, dass**
ein Außenkonturbereich der zur Fahrzeugheckseite gelegenen, karosserieseitigen Schiebetür (2) -Öffnungszarge (6) das karosserieseitige Anschlagelement bildet, während das schiebetürseitige Anschlagelement zwischen einer anschlagwirksamen und einer anschlagunwirksamen Stellung verlagerbar in oder an einem Strebenbereich der Schiebetür (2) angeordnet ist, wobei ein gewollter oder tatsächlicher, über 90° hinausgehender Öffnungswinkel der Hecktür (1) als Voraussetzung für eine tatsächliche Verlagerung des türseitigen Anschlagelementes (3) in dessen anschlagwirksame Anschlagposition erforderlich ist.

2. Schiebetür nach Anspruch 1,
**dadurch gekennzeichnet, dass**
das türseitige Anschlagelement (3) als ein um eine vertikale Achse (5) drehbarer Schwenkkeil ausgebildet ist.

3. Schiebetür nach Anspruch 2,
**dadurch gekennzeichnet, dass**
die Anschlagfläche des Schwenkkeiles (3) in Richtung auf das Fahrzeugheck der Schwenkkeil-Achse (5) vorgelagert ist.

4. Schiebetür nach einem der vorhergehenden Ansprüche,
**dadurch gekennzeichnet, dass**
ein Stellsignal für das Eröffnen der Möglichkeit einer Verlagerung des türseitigen Anschlagelementes durch ein Entriegeln einer 90°-Türschwenkwinkel-Lösesperre in den Drehscharnieren (8) der der Schiebetür (2) benachbarten Hecktür (1) ausgelöst wird.

5. Schiebetür nach einem der vorhergehenden Ansprüche,
**dadurch gekennzeichnet, dass**
für ein Verlagern des türseitigen Anschlagelementes (3) zwei Bedingungen erfüllt sein müssen, nämlich erstens das Vorhandensein eines durch ein gewolltes oder tatsächliches Öffnen der Hecktür (1) über einen vorgegebenen Schwenkwinkel hinaus ausgelöstes erstes Signal sowie zweitens das Vorhandensein eines, einen vorgegebenen Öffnungsweg der Schiebetür (2) angebenden, zweiten Signals.

6. Schiebetür nach einem der vorhergehenden Ansprüche,
**dadurch gekennzeichnet, dass**
das die erste Bedingung darstellende Signal auf einen Verlagerungsantrieb (9) des türseitigen Anschlagelementes (3) oder auf, den Öffnungsweg der Schiebetür (2) erfassende Wegsensoren (7, 7')) übertragen wird, wobei dieses Signal entweder den Verlagerungsantrieb (9) oder die Wegsensoren (7, 7') aus einem zuvor jeweils inaktiven Zustand ausübungsaktiv schaltet.

7. Schiebetür nach einem der vorhergehenden Ansprüche,
**dadurch gekennzeichnet, dass**
diese mit einem Wegsensor ausgerüstet ist, der bei über ein vorbestimmtes Maß geöffneter Schiebetür (2) das Entriegeln einer 90°-Hecktürschwenkwinkel-Lösesperre verhindert.
